# EUROPÄISCHE PATENTSCHRIFT

(11) **EP 2 094 990 B1**
(45) Veröffentlichungstag und Bekanntmachung des Hinweises auf die Patenterteilung: **15.06.2011**
(21) Anmeldenummer: 07821108.3
(22) Anmeldetag: 10.10.2007
(51) Int. Cl.: F16D 55/226

(54) **SCHEIBENBREMSE**
DISK BRAKE
FREIN À DISQUE

(30) Priorität: 23.11.2006 DE 102006055717; 17.07.2007 DE 102007033165
(43) Veröffentlichungstag der Anmeldung: 02.09.2009
(73) Patentinhaber: Continental Teves AG & Co. oHG, 60488 Frankfurt (DE)
(72) Erfinder: BACH, Uwe, 65527 Niedernhausen (DE); HEINZ, Stefan, 65817 Eppstein (DE); BOGENSCHÜTZ, Peter, 30900 Wedemark (DE); SEFO, Ahmed, 60488 Frankfurt/M (DE)
(86) Internationale Anmeldenummer: PCT/EP2007/060740
(87) Internationale Veröffentlichungsnummer: WO 2008/061841

(56) Entgegenhaltungen:
- EP-A- 1 227 260
- WO-A-03/095860
- WO-A-2007/131922
- DE-A1- 4 101 514
- DE-A1-102004 043 307
- US-A1- 2005 194 222

## Beschreibung

Die Erfindung betrifft eine Scheibenbremse.

Eine solche Scheibenbremse ist aus der DE 10 2004 043307 A1 bekannt.

Derzeit wird der Markt von dem Trend zu formschönen, harmonisch und dynamisch anmutenden Bremssätteln stark beeinflusst. Eine Scheibenbremse, insbesondere deren Bremssattel, ist durch eine filigran gestaltete Felge gut sichtbar. Das Design ist zu optimieren. Dies entscheidet oft, ob sich ein Produkt am Markt durchsetzen kann. Eine Methode dieser Forderung gerecht zu werden, ist der Einsatz einer Blende.

Nach der DE 102004043307 A1 ist die Blende als Bestandteil der Federanordnung ausgebildet. Die Blende wird am Gehäuseschenkel verschraubt.

Es ist eine Aufgabe der Erfindung eine Scheibenbremse anzugeben, welche die Nachteile des Stands der Technik vermeidet, ohne dabei die Positiva des Stands der Technik aufzugeben.

Die Aufgabe wird erfindungsgemäß mit den Merkmalen des Patentanspruchs 1 gelöst.

Weitere Einzelheiten der Erfindung gehen aus den Zeichnungen anhand der Beschreibung hervor.

In den Zeichnungen zeigt
- Fig. 1: eine erste Ausführungsform eines Bremssattels ohne Schutzblende,
- Fig. 2: den Bremssattel gemäß Fig. 1 mit einer Schutzblende, die nur einen Bogenabschnitt umfasst,
- Fig. 3: den Bremssattel gemäß Fig. 1 mit einer Schutzblende, die einen Bogen- und einen Zentralabschnitt umfasst,
- Fig. 4: a) - c) verschiedene Ansichten einer weiteren Ausführungsform eines Bremssattels mit einer Schutzblende,
- Fig. 5: a) und b) eine Ausführungsform der Schutzblende gemäß Fig. 4,
- Fig. 6: eine weitere Ausführungsform der Schutzblende gemäß Fig. 4, und
- Fig. 7: die Schutzblende mit einer Federanordnung aus Fig. 2 und 3.

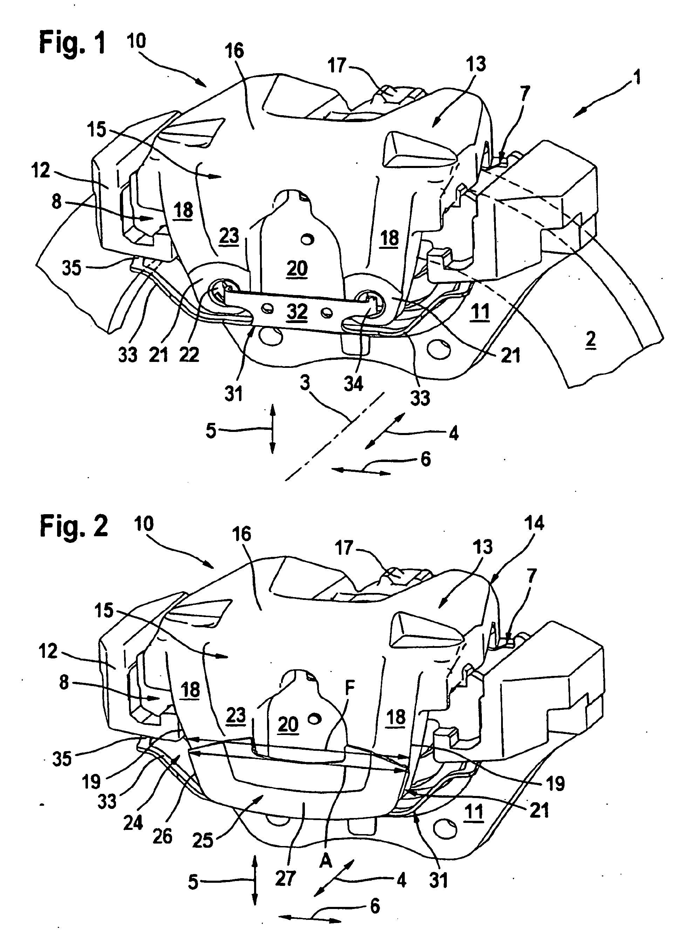

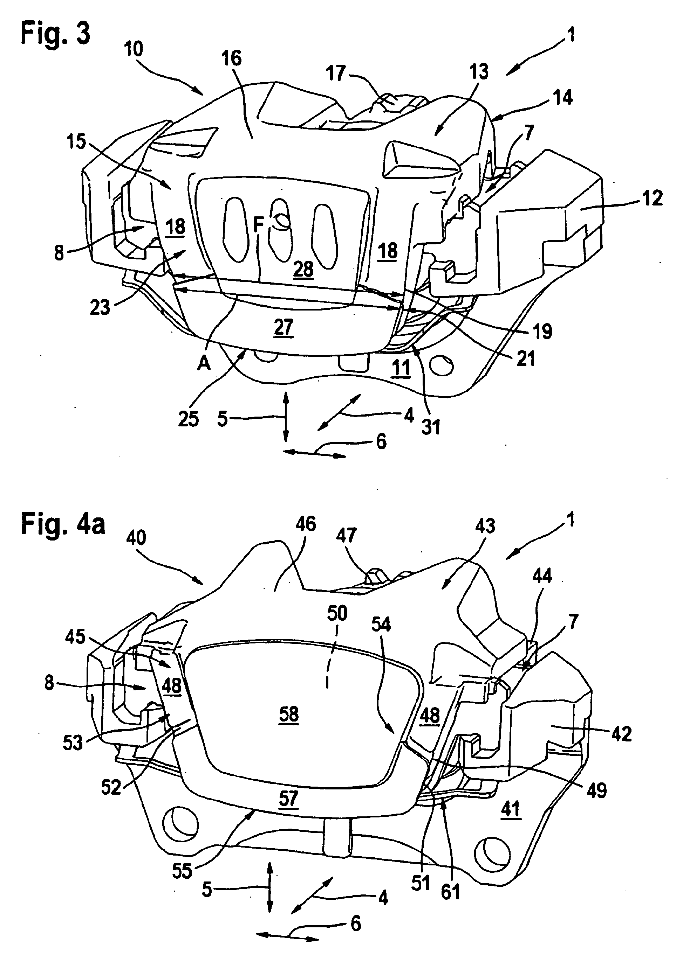

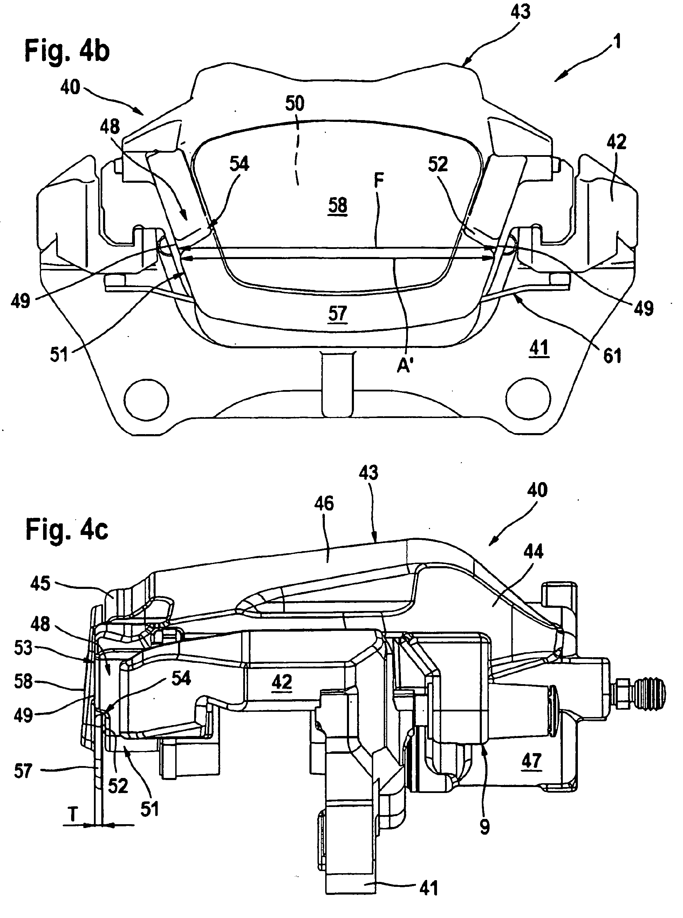

Fig. 1 bis 4 zeigen zwei Ausführungsform eines Bremssattels 10,40 einer Scheibenbremse 1, wobei die Fig. 1 bis 3 die erste und die Fig. 4 die zweite Ausführungsform darlegt. Prinzipiell sind beide Ausführungsformen gleich aufgebaut, wobei sie sich hinsichtlich der Schutzblenden und geometrischen Detailausprägung unterscheiden. Die folgende prinzipielle Beschreibung gilt jedoch für beide Ausführungen. Fig. 1 zeigt eine perspektivische Ansicht auf einen Bremssattel 10 einer Scheibenbremse 1 mit einem Sattelgehäuse 13 und einem fahrzeugfesten Halter 11 ohne eine Schutzblende. In den Fig. 2 bis 4 sind unterschiedliche Schutzblenden 25,25',55,55' an den Bremssätteln 10,40 montiert dargestellt.

Der Bremssattel 10,40 umgreift eine Bremsscheibe 2, welche um die Drehachse 3 drehbar gelagert ist. An der Drehachse 3 orientieren sich Axialrichtung 4, Radialrichtung 5, und Umfangsrichtung 6. Das Sattelgehäuse 13,43 umfasst einen axial inneren Gehäuseschenkel 14,44, der unter anderem eine Betätigungsvorrichtung 17,47 beinhaltet und im verbauten Zustand dem Fahrzeug zugewandt ist. Außerdem umfasst das Sattelgehäuse 13,43 eine Gehäusebrücke 16,46, die einen axial äußeren Gehäuseschenkel 15,45 mit dem inneren Gehäuseschenkel 14,44 verbindet. Der äußere Gehäuseschenkel 15,45 ist zumindest teilweise in Form von zwei Gehäusefingern 18,48 ausgebildet, welche ein dazwischen liegendes, zur Drehachse 3 hin geöffnetes Schenkelfenster 20,50 aufspannen, und wobei die Gehäusefinger 18,48 je einen der Drehachse 3 zugewandten Endabschnitt 21,51 aufweisen. Das Sattelgehäuse 13,43 ist über Bremsbeläge 7,8 und über Bolzenführungen 9 auf Halterarmen 12,42 des Halters 11,41 in Axialrichtung 4 verschiebbar gelagert. Zwischen den Halterarmen 12,42 und dem Sattelgehäuse 13,43 sind die Bremsbeläge 7,8 axial verschiebbar vorgesehen. Eine Federanordnung 31,61 verspannt das Sattelgehäuse 13,43 über die Bremsbeläge 7,8 mit dem Halter 11,41. Die Federanordnung 31,61 ist aus einem metallischen Werkstoff hergestellt, insbesondere wird sie aus einem Blech ausgestanzt und gebogen, und kann grob in einen Befestigungsabschnitt 32,62 und in zwei Federarme 33,63 unterteilt werden. Denkbar ist auch eine Ausführung der Federanordnung aus gebogenem Federdraht. Der Befestigungsabschnitt 32,62 der Federanordnung 31,61 steht senkrecht zu den Federarmen 33,63 und schmiegt sich parallel an Außenflächen 23,53 der Gehäusefinger 18,48 des äußeren Gehäuseschenkels 15,45 an. In den Gehäusefingern 18,48 sind Aufnahmen 22 vorgesehen, welche von Befestigungshaken 34,64 der Federanordnung 31,61 hintergriffen werden, wodurch die Federanordnung 31,61 am Sattelgehäuse 13,43 festgelegt ist. Die Federarme 33,63 enden in balligen Federköpfen 35,65, welche gegen Halterarme 12,42 des Halters 11,41 drücken. So wird zwischen dem Sattelgehäuse 13,43 und dem Halter 11,41 eine Vorspannung erzeugt.

Die prinzipielle Funktion der Scheibenbremse ist wie folgt. Zwischen dem Sattelgehäuse 13,43 und dem Halter 11,41 sind die Bremsbeläge 7,8 angeordnet, wobei die Federanordnung 31,61 das Sattelgehäuse 13,43 über die Bremsbeläge 7,8 auf den Halter 11,41 presst, um einer Geräuschbildung zuvorzukommen. Wird die Bremse betätigt, so baut sich in der Betätigungsvorrichtung 17,47 ein hydraulischer Druck auf, wodurch ein Kolben aus einem Zylinder heraus geschoben wird. Dadurch bewegt sich der Bremsbelag 7 an die Bremsscheibe 2 bis er daran anliegt. Aufgrund dessen schiebt sich nun die Betätigungsvorrichtung 17,47 bzw. der innere, kolbenseitige Gehäuseschenkel 14 von der Bremsscheibe 2 weg und zieht über die Gehäusebrücke 16 den gegenüberliegenden, äußeren Gehäuseschenkel 15 in Richtung der dortigen Bremsscheibenseite. Dadurch wird auch der Bremsbelag 8 an die Bremsscheibe 2 gepresst und beide Bremsbeläge 7,8 üben eine Normalkraft auf Teile der Laufflächen der Bremsscheibe 2 aus.

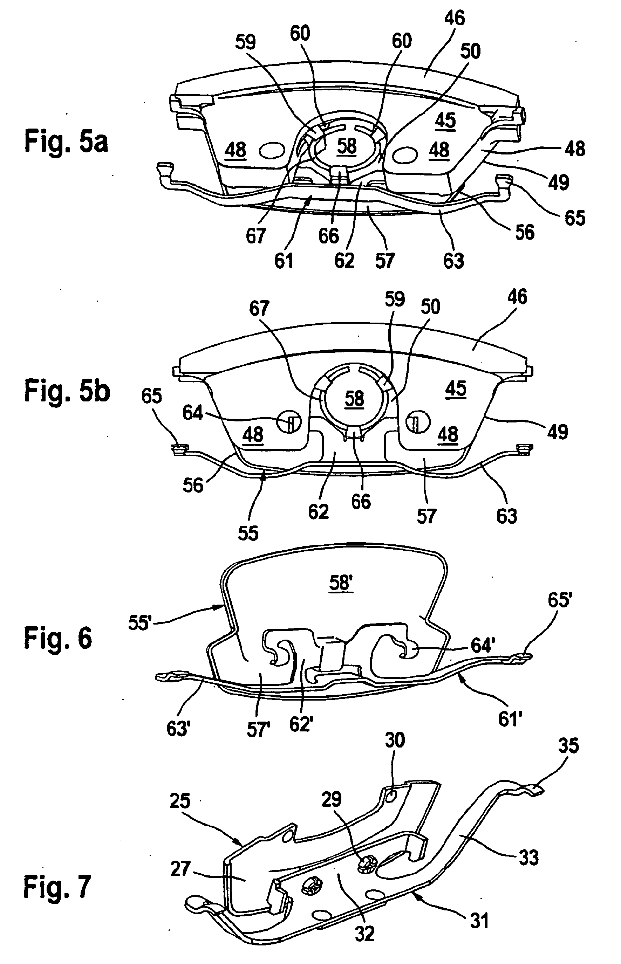

Anhand Fig. 2 wird eine erste Ausführungsform der Schutzblende 25 angeführt, welche in Fig. 7 gesondert dargestellt ist. Die Schutzblende 25, hier nur als U-förmiger Bogenabschnitt 27 ausgeführt, ist in dieser Ausführung mit der Federanordnung 31 verbunden. Dazu sind in dem Befestigungsabschnitt 32 der Federanordnung 31 zwei Bohrungen vorgesehen, die von Verrastungen 29 der Schutzblende 25 durchgriffen werden. Auf diese Weise ist die Schutzblende 25 auf die Federanordnung 31 anklemmbar. Somit schützt die Schutzblende 25 den Bremssattel 10 vor unerwünschten Einflüssen und rundet optisch den äußeren Gehäuseschenkel 15 ab, indem optisch beide Gehäusefinger 18 verbunden werden. Das Schenkelfenster 20 bleibt offen. Die vorteilhafte optische Gestalt des Bremssattels 10 mit der Schutzblende 25 wird dadurch erreicht, indem an dem Übergang 24 zwischen der Schutzblende 25 und den Gehäusefingern 18 die geometrischen Maße der beiden Bauteile zueinander angepasst sind. Dabei ist am Übergang 24 das Außenmaß A der Schutzblende 25 in Umfangsrichtung 6 im Wesentlichen so groß wie der Abstand F der tangentialen Außenkanten 19 der beiden Gehäusefinger 18. Auf diese Weise ergibt sich in axialer Projektion ein im Wesentlichen stufenloser Übergang zwischen der Schutzblende 25 und dem äußeren Gehäuseschenkel 15. Zur weiteren Erhöhung der optischen und ästhetischen Qualität des Bremssattels 10 sind die Außenkanten 26 Schutzblende 25 auch hinsichtlich Ihrer Ausrichtung in axialer Projektion an die tangentialen Außenkanten 19 der beiden Gehäusefinger 18 angepasst. Dabei verlaufen die Außenkanten 26 der Schutzblende 25 in axialer Projektion im Wesentlichen parallel zu den tangentialen Außenkanten 26 der Gehäusefinger 18. Zusammengefasst bedeutet dies, dass die Konturlinie der Schutzblende 25 in axialer Projektion in die Konturlinie der Gehäusefinger 18 ohne einen wesentlichen Knick oder Versatz übergeht.

Die Anordnung der Schutzblende 25 an der Federanordnung 31 und an dem Sattelgehäuse 13 ist derart ausgeprägt, dass nur ein definierter Kontakt zwischen dem Bogenabschnitt 27 und den Gehäusefingern 18 über die Vorsprünge 30 zustande kommt. Aufgrund der geringen und definierten Kontaktpunkte kann das Entstehen von Klappergeräuschen verhindert werden. Unter Umständen kann es jedoch vorteilhafter sein, die Schutzblende ausschließlich an der Federanordnung abzustützen, und einen direkten Kontakt zu den Gehäusefingern zu vermeiden.

Fig. 3 zeigt den Bremssattel 10 aus Fig. 2, wobei die Schutzblende 25' mit der Federanordnung 31 verbunden ist und neben dem Bogenabschnitt 27 auch einen Zentralabschnitt 28 umfasst. Dieser deckt das Schenkelfenster 20 ab, wodurch der Bremssattel 10 besser geschützt ist und zudem eine kompaktere und harmonischere Erscheinungsform aufweist. Im der vorliegenden Ausführung sind der Bogenabschnitt 27 und der Zentralabschnitt 28 als unterschiedliche Bauteile ausgeführt. Dies hat den Vorteil, dass unterschiedliche Werkstoffe verwendet werden können. Denkbar ist, dass der Bogenabschnitt 27 als Standardbauteil ohne eine Möglichkeit für eine Individualisierung ausgeführt ist, wohingegen der Zentralabschnitt 28 kundenspezifisch hinsichtlich der Farbe, des Werkstoffs oder der Oberflächeneigenschaften anpassbar ist. Der Zentralabschnitt 28 ist mittels Einrastmitteln direkt in Ausnehmungen im äußeren Gehäuseschenkel 15 einrastbar.

Alternativ zu der Ausführung der Schutzblende aus Fig. 3 und Fig. 7 wird anhand eines in Fig. 4 gezeigten Bremssattels 40 eine weitere Ausführungsform einer Schutzblende 55 eingeführt. Diese umfasst einen U-förmigen Bogenabschnitt 57 und einen Zentralabschnitt 58 und ist einstückig als ein Bauteil ausgeführt. Diese Schutzblende 55 verbessert die optische Gestalt des Bremssattels 40 zum einen dadurch, dass am Übergang 54 zwischen der Schutzblende 55 und den Gehäusefingern 48 das Außenmaß A' der Schutzblende 55 in Umfangsrichtung 6 im Wesentlichen so groß wie der Abstand F der tangentialen Außenkanten 49 der beiden Gehäusefinger 48 ist. Außerdem verlaufen die Außenkanten 56 der Schutzblende 55 in axialer Projektion im Wesentlichen parallel zu den tangentialen Außenkanten 49 der Gehäusefinger 48. Die Anpassung der geometrischen Ausprägung der Schutzblende 55 und der Gehäusefinger 48 am Übergang bewirkt, dass die Konturlinie der Schutzblende 55 bzw. des U-förmigen Bogenabschnitts 57 in axialer Projektion in die Konturlinie der Gehäusefinger 48 ohne einen wesentlichen Knick oder Versatz übergeht.

Eine weitere Optimierung in optischer und ästhetischer Hinsicht wird durch die in Fig. 4a und besonders in Fig. 4c gezeigten technischen Merkmale erreicht. Dazu ist an den Endabschnitten 51 der Gehäusefinger 48 ein axialer Versatz 52 zur Aufnahme der Schutzblende 55, insbesondere des Bogenabschnitts 57 vorgesehen. Dieser bewirkt, dass der Übergang 54 zwischen der Schutzblende 55 und den Gehäusefingern 48 in Axialrichtung 4 im Wesentlichen stufenlos ausgebildet ist. Dies soll anhand Fig. 4c verdeutlicht werden. Der Versatz 52 in den Endabschnitten 51 der Gehäusefinger 48 wird dadurch erreicht, dass die Endabschnitte 51 in Axialrichtung 4 schmaler ausgebildet sind als die restlichen Gehäusefinger 48, so dass die Gehäusefinger 48 an ihrem der Drehachse 3 zugewandten Endabschnitt 51 eine Stufung aufweisen. Diese Stufung kompensiert im Überdeckungsbereich des Bogenabschnitts 57 und der Endabschnitte 51 die axiale Stärke T des Bogenabschnitts 57, so dass die Gesamtoberfläche, gebildet durch die Gehäusefinger 48 und den Bogenabschnitt 57 in Axialrichtung 4 im Wesentlichen eben, das heißt ohne Stufung und Knick, ausgebildet ist. Es sei betont, dass es selbstverständlich zur Bildung von kleinen Spalten oder zu geringer geometrischer Inhomogenität kommen kann, welche jedoch nicht als wesentlich und erfindungsrelevant erachtet werden.

Die Fig. 5 a und b zeigen den äußeren Gehäuseschenkel 44 betrachtet aus Sicht des inneren Gehäuseschenkels 45. Dabei ist eine Ausführungsform der Schutzblende 55 aus Fig. 4 dargestellt, wobei die Schutzblende 55 und die Federanordnung 61 mit gemeinsamen Verbindungsmitteln am äußeren Gehäuseschenkel 44 angeordnet sind. Die Schutzblende 55 umfasst den Zentralabschnitt 58 und den Bogenabschnitt 57. Die Federanordnung 61 weist einen Befestigungsabschnitt 62 mit Befestigungshaken 64 und Federarme 63 mit Federköpfen 65 auf. Weiterhin ist an dem Befestigungsabschnitt 62 eine Federverrastung 66 vorgesehen, die im Zusammenwirken mit einem Federring 67 und mit Blendenverrastungen 59 die Federanordnung 61 und die Schutzblende 55 am Gehäuseschenkel 44 lösbar festlegt. Dazu sind in dem Gehäuseschenkel 44 Ausnehmungen 60 eingebracht, in welche die Blendenverrastungen 59 unter Vorspannung eingreifen, und so die Schutzblende 55 und den Federring 67 am Gehäuseschenkel 44 befestigen. Die Federverrastung 66 hintergreift auch den Federring 67, wodurch die Federanordnung 61 axial abgestützt ist. Denkbar ist auch eine Wirkungsumkehr, bei welcher die Federanordnung in den Aufnahmen in den Endabschnitten der Gehäusefinger axial festgelegt ist, und die Federverrastung zur axialen Abstützung des Federrings und der Schutzblende dient. Denkbar ist auch, dass an der Schutzblende 55 eine Draht- oder Blechfeder vorgesehen ist, die in die Ausnehmungen 60 unter Vorspannung eingreift und die Schutzblende 55 an den Gehäusefingern 45 festlegt. Optional kann dieser Draht oder Blechfeder sich teilweise in den Ausnehmungen 60 und am Befestigungsabschnitt 62 der Federanordnung 61 abstützen. Eine solche Feder ist an die Schutzblende ansteckbar ausgeführt oder sie wird durch Umspritzen direkt mit der Schutzblende 55 verbunden.

Fig. 6 zeigt eine günstige Ausprägung einer Schutzblende 55' und der Federanordnung 61', wobei die Schutzblende 55' den Zentralabschnitt 58' und den Bogenabschnitt 57' einstückig umfasst. Die Schutzblende 55' ist hier um die Federanordnung 61' durch Urformung herumgebildet. Denkbar ist eine Ausführung der Schutzblende aus Kunststoff, die auf die Federanordnung aufgespritzt wird.

Vorzugsweise sind die verschiedenen Ausführungsformen der Schutzblende 25,25',55,55', aus einem Kunststoff hergestellt. Denkbar sind auch Metall- und Blechausführungen, insbesondere dann, wenn der Bogenabschnitt und der Zentralabschnitt als unterschiedliche Bauteile ausgeführt sind. Als besonders vorteilhaft hinsichtlich der mechanischen und optischen Eigenschaften ist die Verwendung von Faser- und Verbundwerkstoffen, wie zum Beispiel Carbonfaserstrukturen oder ähnliches.

Die in den Figuren dargestellten Merkmale sind auch untereinander kombinierbar und nicht auf die einzelnen Ausführungsbeispiele begrenzt.

### Bezugszeichenliste

- 1: Scheibenbremse
- 2: Bremsscheibe
- 3: Drehachse
- 4: Axialrichtung
- 5: Radialrichtung
- 6: Umfangsrichtung
- 7: Bremsbelag
- 8: Bremsbelag
- 9: Bolzenführung
- 10: Bremssattel
- 11: Halter
- 12: Halterarm
- 13: Sattelgehäuse
- 14: Gehäuseschenkel
- 15: Gehäuseschenkel
- 16: Gehäusebrücke
- 17: Betätigungsvorrichtung
- 18: Gehäusefinger
- 19: Außenkante
- 20: Schenkelfenster
- 21: Endabschnitt
- 22: Aufnahme
- 23: Außenfläche
- 24: Übergang
- 25: Schutzblende
- 26: Außenkanten
- 27: Bogenabschnitt
- 28: Zentralabschnitt
- 29: Verrastung
- 30: Vorsprung
- 31: Federanordnung
- 32: Befestigungsabschnitt
- 33: Federarm
- 34: Befestigungshaken
- 35: Federkopf
- 40: Bremssattel
- 41: Halter
- 42: Halterarm
- 43: Sattelgehäuse
- 44: Gehäuseschenkel
- 45: Gehäuseschenkel
- 46: Gehäusebrücke
- 47: Betätigungsvorrichtung
- 48: Gehäusefinger
- 49: Außenkante
- 50: Schenkelfenster
- 51: Endabschnitt
- 52: Versatz
- 53: Außenfläche
- 54: Übergang
- 55: Schutzblende
- 56: Außenkanten
- 57: Bogenabschnitt
- 58: Zentralabschnitt
- 59: Blendenverrastung
- 60: Ausnehmung
- 61: Federanordnung
- 62: Befestigungsabschnitt
- 63: Federarm
- 64: Befestigungshaken
- 65: Federkopf
- 66: Federverrastung
- 67: Federring
- A: Außenmaß
- F: Abstand
- T: Stärke

## Patentansprüche

1. Scheibenbremse mit mindestens einer um eine Drehachse (3) drehbar gelagerten Bremsscheibe (2) und mit einem Bremssattel (10,40), der einen fahrzeugfesten Halter (11,41), ein Sattelgehäuse (13,43) und mindestens einen Bremsbelag (7,8) und eine Federanordnung (31,61) zwischen Halter (11,41) und Sattelgehäuse (13,43) zur Erzeugung einer Vorspannkraft umfasst, wobei der Halter (11,41) und das Sattelgehäuse (13,43) die Bremsscheibe (2) axial umgreifen, das Sattelgehäuse (13,43) und der Bremsbelag (7,8) an dem Halter (11,41) in einer Axialrichtung (4) verschiebbar gelagert sind, wobei das Sattelgehäuse (13,43) einen Fahrzeug zugewandten, axial inneren Gehäuseschenkel (14,44), einen äußeren Gehäuseschenkel (15,45) und eine Gehäusebrücke (16,46) aufweist, der äußere Gehäuseschenkel (15,45) mindestens zwei im Wesentlichen in einer Radialrichtung (5) verlaufende Gehäusefinger (18,48) umfasst, welche ein dazwischen liegendes, zur Drehachse (3) hin geöffnetes Schenkelfenster (20,50) aufspannen, wobei die Gehäusefinger (18,48) je einen der Drehachse (3) zugewandten Endabschnitt aufweisen, eine Schutzblende (25,25',55,55') die Endabschnitte (21,51) der Gehäusefinger (18,48) vollständig überdeckt und einen der Drehachse (3) zugewandten Abschnitt des Schenkelfensters (20,50) verdeckt, wobei ein Außenmaß (A,A') der Schutzblende (25,25',55,55') in einer Umfangsrichtung (6) derart ausgeführt ist, dass ein Übergang (24,54) zwischen der Schutzblende (25,25',55,55') und den Gehäusefingern (18,48) in axialer Projektion im Wesentlichen stufenlos ausgebildet ist, und an der Schutzblende (25,25',55,55') Verbindungsmittel angeordnet sind, welche in dem Schenkelfenster (20,50) platziert sind, und unter Vorspannung in Ausnehmungen (60) vom Gehäuseschenkel (15,45) eingreifen und die Schutzblende (25,25',55,55') am Sattelgehäuse (13,43) festlegen.

2. Scheibenbremse nach Anspruch 1, **dadurch gekennzeichnet, dass** die Schutzblende (25,25',55,55') einen U-förmigen Bogenabschnitt (27,57) aufweist, welcher das Schenkelfenster (20,50) in Radialrichtung (5) begrenzt.

3. Scheibenbremse nach Anspruch 1 oder 2, **dadurch gekennzeichnet, dass** an dem Übergang (20,50) eine Außenkante (26,56) der Schutzblende (25,25',55,55') in axialer Projektion im Wesentlichen parallel zu einer Außenkante (19,49) des Gehäusefingers (18,48) verläuft.

4. Scheibenbremse nach Anspruch 1, **dadurch gekennzeichnet, dass** an den Endabschnitten (51) der Gehäusefinger (48) ein axialer Versatz (52) zur Aufnahme der Schutzblende (55,55') vorgesehen ist.

5. Scheibenbremse nach einem oder mehreren der voran gestellten Ansprüche, **dadurch gekennzeichnet, dass** die Schutzblende (25,25',55,55') einen Zentralabschnitt (25',55,55') aufweist, welcher das Schenkelfenster (20) im Wesentlichen verdeckt.

6. Scheibenbremse nach Anspruch 5, **dadurch gekennzeichnet, dass** die Schutzblende (55,55'), umfassend den Bogenabschnitt (57) und den Zentralabschnitt (58), einstückig ausgebildet ist.

7. Scheibenbremse nach einem oder mehreren der vorangestellten Ansprüche, **dadurch gekennzeichnet, dass** in den Endabschnitten (21,51) der Gehäusefinger (18,48) eine Aufnahme (22) vorgesehen ist, in welche die Federanordnung (31,61) eingreift.

8. Scheibenbremse nach einem oder mehreren der voran gestellten Ansprüche, **dadurch gekennzeichnet, dass** die Schutzblende (25,25',55,55') an der Federanordnung (31,61) angeordnet ist.

9. Scheibenbremse nach einem oder mehreren der voran gestellten Ansprüche, **dadurch gekennzeichnet, dass** die Schutzblende (25,25',55,55') und die Federanordnung (31,61) mit gemeinsamen Verbindungsmitteln am äußeren Gehäuseschenkel (15,45) angeordnet sind.

10. Scheibenbremse nach Anspruch 1, **dadurch gekennzeichnet, dass** zur Vorspannung einer Blendenverrastung (59) ein Federring (67) vorgesehen ist.

## Claims

1. Disk brake having at least one brake disk (2), which is mounted so as to be rotatable about a rotational axis, and having a brake caliper (10, 40), which brake caliper has a bracket (11, 41) which is fixed with respect to the vehicle, a caliper housing (13, 43), at least one brake lining (7, 8) and a spring arrangement (31, 61) between the bracket (11, 41) and the calliper housing (13, 43) for generating a preload force, with the bracket (11, 41) and the caliper housing (13, 43) engaging axially around the brake disk (2), the caliper housing (13, 43) and the brake lining 7, 8 being mounted on the bracket (11, 41) so as to be movable in an axial direction (4), with the caliper housing (13, 43) having an axially inner housing limb (14, 44) which faces toward the vehicle, an outer housing limb (15, 45) and a housing bridge(16, 46), the outer housing limb (15, 45) comprising at least two housing fingers (18, 48) which run substantially in a radial direction (5), which housing fingers span a limb window (20, 50) which is situated between them and which is open in the direction of the rotational axis (3), with the housing fingers (18, 48) having in each case one end section which faces toward the rotational axis (3), a protective screen (25,25',55,55') completely covering the end sections (21,51) of the housing fingers (18,48) and concealing a section, which faces toward the rotational axis (3), of the limb window (20,50), with an outer dimension (A,A') of the protective screen (25,25',55,55') in a circumferential direction (6) being designed such that a transition (24,54) between the protective screen (25,25',55,55') and the housing fingers (18,48) is substantially stepless in an axial projection, and connecting means being arranged on the protective screen (25,25',55,55'), which connecting means are placed in the limb window (20, 50), and under preload engage into recesses (60) of the housing limb (15, 45) and fix the protective screen (25,25',55,55') to the caliper housing (13,43).

2. Disk brake according to Claim 1, **characterized in that** the protective screen (25,25',55,55') has a U-shaped bend section (27,57) which delimits the limb window (20,50) in the radial direction (5).

3. Disk brake as claimed in Claim 1 or 2, **characterized in that**, at the transition (24,54), an outer edge (26,56) of the protective screen (25,25',55,55') runs substantially parallel to an outer edge (19,49) of the housing finger (18,48) in an axial projection.

4. Disk brake as claimed in Claim 1, **characterized in that** an axial offset (52) for holding the protective screen (55,55') is provided on the end sections (51) of the housing fingers (48).

5. Disk brake as claimed in one or more of the preceding claims, **characterized in that** the protective screen (25,25',55,55') has a central section (25',55,55') which substantially conceals the limb window (20).

6. Disk brake as claimed in Claim 5, **characterized in that** the protective screen (55,55'), comprising the bend section (57) and the central section (58), is formed in one piece.

7. Disk brake as claimed in one or more of the preceding claims, **characterized in that** a receptacle (22), into which the spring arrangement (31,61) engages, is provided in the end sections (21,51) of the housing fingers (18,48).

8. Disk brake as claimed in one or more of the preceding claims, **characterized in that** the protective screen (25,25',55,55') is arranged on the spring arrangement (31,61).

9. Disk brake as claimed in one or more of the preceding claims, **characterized in that** the protective screen (25,25',55,55') and the spring arrangement (31,61) are arranged, with common connecting means, on the outer housing limb (15,45).

10. Disk brake according to Claim 1, **characterized in that** a spring ring (67) is provided to preload the screen latching mechanisms (59).

## Revendications

1. Frein à disque comprenant au moins un disque de frein (2) monté à rotation autour d'un axe de rotation et un étrier de frein (10, 40), qui comprend une fixation (11, 41) fixée au véhicule, un boîtier d'étrier (13, 43), au moins une garniture de frein (7, 8) et un agencement de ressort (31, 61) entre la fixation (11, 41) et le boîtier d'étrier (13, 43) pour produire une force de précontrainte, la fixation (11, 41) et le boîtier d'étrier (13, 43) venant en prise axialement autour du disque de frein (2), le boîtier d'étrier (13, 43) et la garniture de frein (7, 8) étant montés de manière déplaçable sur la fixation (11, 41) dans une direction axiale (4), le boîtier d'étrier (13, 43) présentant une branche de boîtier axialement interne (14, 44) tournée vers le véhicule, une branche de boîtier externe (15, 45) et un pont de boîtier (16, 46), branche de boîtier externe (15, 45) comprenant au moins deux doigts de boîtier (18, 48) s'étendant essentiellement dans une direction radiale (5), qui s'étendent au-dessus d'une fenêtre de branche (20, 50) située entre eux, ouverte vers l'axe de rotation (3), les doigts de boîtier (18, 48) présentant chacun une portion d'extrémité tournée vers l'axe de rotation (3), un bandeau de protection (25, 25', 55, 55') qui recouvre les portions d'extrémité (21, 51) des doigts de boîtier (18, 48) complètement et recouvre une portion de la fenêtre de branche (20, 50) tournée vers l'axe de rotation (3), une dimension externe (A, A') du bandeau de protection (25, 25', 55, 55') étant réalisée dans une direction périphérique (6) de telle sorte qu'une transition (24, 54) soit réalisée essentiellement en continu en projection axiale entre le bandeau de protection (25, 25', 55, 55') et les doigts de boîtier (18, 48), et des moyens de liaison étant disposés sur le bandeau de protection (25, 25', 55, 55'), lesquels sont placés dans la fenêtre de branche (20, 50), et viennent en prise avec précontrainte dans des logements (60) de la branche de boîtier (15, 45) et fixent le bandeau de protection (25, 25', 55, 55') sur le boîtier d'étrier (13, 43).

2. Frein à disque selon la revendication 1, **caractérisé en ce que** le bandeau de protection (25, 25', 55, 55') présente une portion courbe en forme de U (27, 57) qui limite la fenêtre de branche (20, 50) dans la direction radiale (5).

3. Frein à disque selon la revendication 1 ou 2, **caractérisé en ce qu'**au niveau de la transition (24, 54) s'étend une arête extérieure (26, 56) du bandeau de protection (25, 25', 55, 55'), en projection axiale essentiellement parallèlement à une arête extérieure (19, 49) du doigt de boîtier (18, 48).

4. Frein à disque selon la revendication 1, **caractérisé en ce qu'**au niveau des portions d'extrémité (51) des doigts de boîtier (48) est prévu un décalage axial (52) pour recevoir le bandeau de protection (55, 55').

5. Frein à disque selon l'une quelconque ou plusieurs des revendications précédentes, **caractérisé en ce que** le bandeau de protection (25, 25', 55, 55') présente une portion centrale (25', 55, 55') qui recouvre sensiblement la fenêtre de branche (20).

6. Frein à disque selon la revendication 5, **caractérisé en ce que** le bandeau de protection (55, 55'), comprenant la portion courbe (57) et la portion centrale (58), est réalisé d'une seule pièce.

7. Frein à disque selon l'une quelconque ou plusieurs des revendications précédentes, **caractérisé en ce que** dans les portions d'extrémité (21, 51) des doigts de boîtier (18, 48) est prévu un logement (22) dans lequel s'engage l'agencement de ressort (31, 61).

8. Frein à disque selon l'une quelconque ou plusieurs des revendications précédentes, **caractérisé en ce que** le bandeau de protection (25, 25', 55, 55') est disposé sur l'agencement de ressort (31, 61).

9. Frein à disque selon l'une quelconque ou plusieurs des revendications précédentes, **caractérisé en ce que** le bandeau de protection (25, 25', 55, 55') et l'agencement de ressort (31, 61) sont disposés avec des moyens de connexion communs sur la branche de boîtier externe (15, 45).

10. Frein à disque selon la revendication 1, **caractérisé en ce que** pour la précontrainte des encliquetages du bandeau (59), on prévoit une bague élastique (67).
